# EUROPEAN PATENT APPLICATION

(11) **EP 3 574 788 A1**
(43) Date of publication of application: **04.12.2019**
(21) Application number: 18745073.9
(22) Date of filing: 24.01.2018
(51) Int. Cl.: A43B 13/12, A43B 5/02

(54) **SOLE STRUCTURE AND MANUFACTURING METHOD THEREFOR**

(30) Priority: 25.01.2017 CN 201710061336
(71) Applicant: Qingyuan Global Technology Services Ltd., Qingyuan City, Guangdong 51180 (CN)
(72) Inventor: LUH, Yih Ping, Taipei 104 (TW)
(74) Representative: dompatent von Kreisler Selting Werner - Partnerschaft von Patent- und Rechtsanwälten mbB
(86) International application number: PCT/CN2018/073979
(87) International publication number: WO 2018/137653

(57) **Abstract**

The disclosed sole structure of the present invention comprises a first sole layer, a second sole layer and spikes. The first sole layer has an upper surface and a lower surface, a plurality of openings penetrating the upper surface. The spikes arrange at a side close to the lower surface and correspond to the openings. Each of the spikes has a gap with the corresponding opening. The second sole layer envelops the first sole layer. Wherein a portion of the second layer is attached to the upper surface, and another portion of the second sole layer is attached to the lower surface, and the second sole layer located to a side of the lower surface extends into the openings and connects to the spike.

## Description

### BACKGROUND OF THE INVENTION

### 1. Field of the invention

The present invention generally relates to a sole structure, in particular for a sole structure having spikes.

### 2. Description of the prior art

Shoes provide protection for their user's feet. For sports shoes, they should not only provide protection but also stabilize the feet and provide better contact with the ground. Take football shoes as an example. Because the user runs for a long time, the soles are prone to wear and tear. It is necessary to have a wear-resistant sole structure. Furthermore, to reduce fatigue, the weight of the shoes also should be lightened. In a conventional sole structure, spikes are inserted directly into the sole structure. When treading on ground, especially while running, such a structure increases the risk of injury due to increased impact to the foot. Therefore, the conventional sole structure needs to be improved.

### SUMMARY OF THE INVENTION

The present invention provides a sole structure and the manufacturing method for the sole structure to improve overall elasticity and durability.

The sole structure comprises a first sole layer, a second sole layer and spikes. The first sole layer has an upper surface and a lower surface, and there are a plurality of openings penetrating the upper surface. The spikes are located at the side close to the lower surface and correspond to the openings. There is a gap between each of the spikes and its corresponding opening. The second sole layer envelops the first sole layer, wherein a portion of the second layer is attached to the upper surface, and another portion of the second sole layer is attached to the lower surface. The part of the second sole layer located adjacent to the side of the lower surface extends into the openings and connects to the spikes.

In an embodiment, the first sole layer has a plurality of tubular walls surrounding the peripheries of the openings respectively, and such tubular walls extend to the side of the lower surface, and the end of the tubular wall away from the openings contracts towards the center of the opening, and the second sole layer envelops the tubular walls.

In an embodiment, the gap is located between the end of the tubular walls away from the lower surface and the spikes.

In an embodiment, the first sole layer is a hard-fiber sole layer and the second sole layer is a thermoplastic-elastic sole layer.

In an embodiment, the second sole layer and the spikes are identical in material.

In an embodiment, the first sole layer is a carbon-fiber sole layer, and the second sole layer is a thermoplastic polyurethane sole layer.

A method for manufacturing the sole structure comprises steps below: forming a plurality of spikes in the mold; placing a first sole layer in the mold, with the first sole layer having an upper surface and a lower surface, and a plurality of openings penetrating the upper surface; placing the spikes at the side close to the lower surface and making them correspond to the openings, with a gap between each of the spikes and its corresponding opening.

The manufacturing method further comprises: dispensing an uncured second sole layer in the mold, wherein, a portion of the second sole layer is attached to the upper surface, and another portion of the second sole layer is attached to the lower surface, and the side of the second sole layer located on the lower surface extends into the openings and connects to the spikes.

In an embodiment, the first sole layer has a plurality of tubular walls surrounding the peripheries of the openings respectively, and such tubular walls extend to the side of the lower surface, and the end of the tubular walls away from the openings contracts towards the center of the opening, and the second sole layer envelops the tubular walls.

In an embodiment, the gap is located between the end of the tubular walls away from the lower surface and the spikes.

In an embodiment, the first sole layer is a hard-fiber sole layer and the second sole layer is a thermoplastic-elastic sole layer.

In an embodiment, the second sole layer and the spikes are identical in material.

In an embodiment, the first sole layer is a carbon-fiber sole layer and the second sole layer is a thermoplastic polyurethane sole layer.

### BRIEF DESCRIPTION OF THE APPENDED DRAWINGS

Figure 1 is a schematic view of an embodiment of the first sole layer of the present invention.
Figure 2A is a sectional view of an embodiment of the sole structure.
Figure 2B is a partially enlarged view of the location of the spikes on the sole structure.
Figure 3 is a flow chart of the manufacturing procedure of the sole structure.
Figures 4 and 5 are schematic views of the manufacturing procedure of the sole structure.
Figure 6A is a schematic view of the dispensing of the second sole layer.
Figure 6B is a schematic view of the bonding of the second sole layer with the spikes.
Figure 7 is a schematic of an embodiment of the spikes.

### DETAILED DESCRIPTION OF THE INVENTION

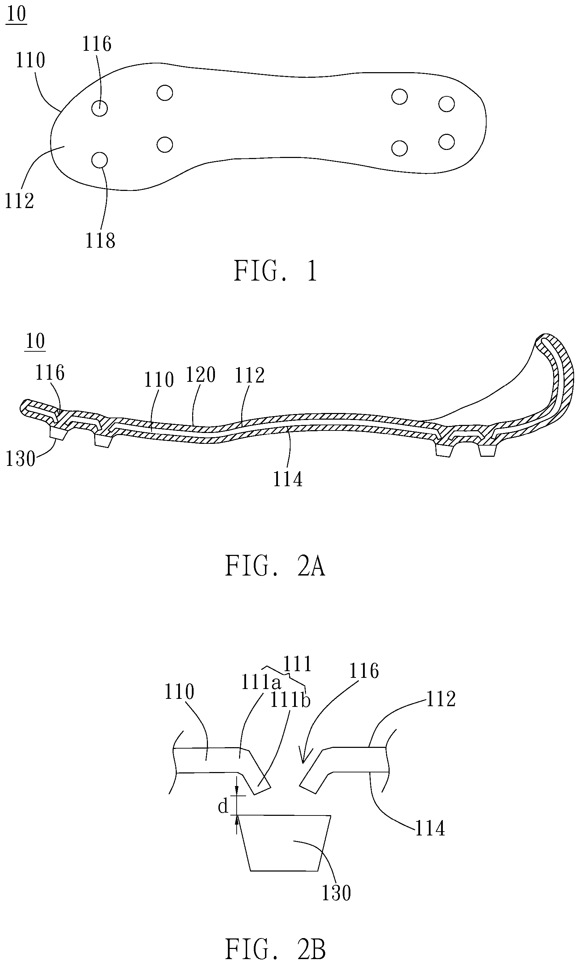

The present invention provides a sole structure having elasticity to enhance protection for the feet. The sole structure of the present invention applies to sports shoes such as, but not limited to, football shoes. Figure 1 is a schematic view of an embodiment of the first sole layer 110 of the sole structure 10. As shown in Figure 1, the sole structure 10 includes a first sole layer 110. The first sole layer 110 has an upper surface 112 and a plurality of openings 116 penetrating the upper surface 112. Refer to the section view shown in the Figure 2. As shown in the Figure 2, the first sole layer 110 has an upper surface 112 and a lower surface 114. The openings 116 on the first sole layer 110 penetrate the upper surface 112 and the lower surface 114.

In addition, the sole structure 10 includes a second sole layer 120 and spikes 130. The spikes 130 are disposed at a side close to the lower surface 114 and correspond to the openings 116. For example, each of the openings 116 corresponds to a spike 130. The second sole layer 120 envelops the first sole layer 110, wherein a part of the second sole layer 120 adheres to the upper surface 112, and a part of the second sole layer 120 adheres to the lower surface 114. As shown in Figure 2A, at the side near the lower surface 114, the second sole layer 120 is penetrated by the spike 130 and attached to the lower surface 114.

Refer to Figure 2B. Figure 2B is a partially enlarged view of the location of the spikes 130 on the sole structure 10. For concise explanation, Figure 2B only illustrates the spike 130 and a portion adjacent to the opening 116 of the first sole layer 110 and does not illustrate the second sole layer. As mentioned before, the first sole layer 110 has the opening 116. Refer to Figure 1 and 2B. The openings 116 have peripheries 118, wherein each of the openings 116 has a tubular wall 111 surrounding the periphery 118 of opening 116, and the tubular wall extends towards the lower surface 114. More specifically, the tubular wall 111 has a first end 111a and a second end 111b. The first end 111a connects to the first sole layer 110. The second end 111b is the end of the tubular wall 111 opposite to the first end 111a. As shown in Figure 2B, the tubular wall 111 extends from the first end 111a toward the side of the lower surface 114 and projects out. The end of the tubular wall 111 away from the lower surface 114, also known as the second end 111b, contracts toward the center of the opening 116. In other words, the opening 116 tapers along the direction that the tubular wall 111 projects from the lower surface 114 to form an oblique tubular wall.

In an embodiment, the tubular wall encircles to form a closed type. For example, the tubular wall 111 in Figure 2B forms a closed cone with an opening to the spike in the lower part by spinning from the left side of the tubular wall 111 to its right side on an axis drawn from the spike to the opening. In other embodiment, the tubular wall may be a semi-closed type. For example, there may be gaps between two tubular walls which have a semi-circular cross section. Moreover, the shape of the opening 116 is not limited to circular. In other embodiment, the shape of the opening may be triangular or of different shapes based on design needs on different places of the first sole layer.

Moreover, as shown in Figure 2B, there is a gap d between the spike 130 and the corresponding opening 116. The gap d is located between the end of the tubular wall 111 away from the lower surface 114 and the spike 130. Refer to Figure 2A and 2B. The second sole layer 120 passes through the gap d and is attached to the lower surface 114. In addition, the second sole layer 120 is located on the side of the lower surface 114 that extends into the opening 116 and connects with the spike 130. Therefore, the second sole layer 120 envelops the first sole layer 110 and connects with the spike 130 through the gap d by extending into the openings of the first sole layer 110. On the other hand, the second sole layer 120 envelops the tubular wall 111; that is, it envelops the tubular wall by attaching itself to the upper surface and the lower surface and extending into the openings.

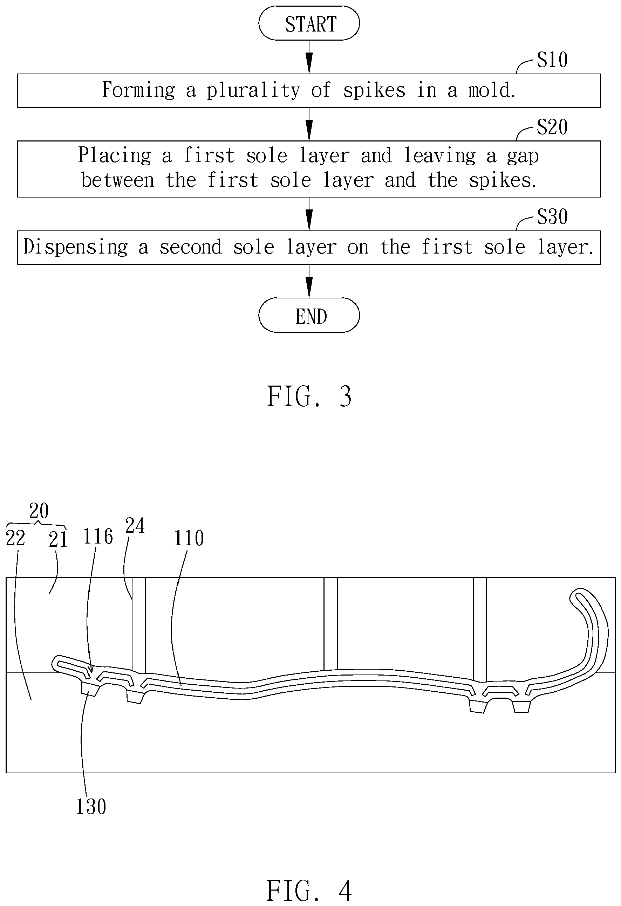

Figure 3 is a flow chart of the manufacturing procedure of the sole structure. As shown in Figure 3, the manufacturing method of the sole structure comprises step S10: forming a plurality of spikes in a mold, step S20: placing a first sole layer and leaving a gap between the first sole layer and the spikes.

Refer to Figure 4, an illustration of the manufacturing procedure for the sole structure. As shown in Figure 4, the sole structure is formed in a mold. The mold 20 comprises an upper die 21 and a lower die 22. The upper die 21 has a plurality of channels 24 for injection molding. The manufacturing procedure includes forming the spikes 130 in the mold 20 first and then placing the first sole layer 110 inside the mold 20. The first sole layer 110 has openings 116 and there is a gap between each spike 130 and its corresponding opening 116.

As shown in Figure 3, step S30 involves dispensing a second sole layer on the first sole layer; more specifically, dispensing an uncured second sole layer to the upper surface and the lower surface of the first sole layer in the mold. For example, by injecting the uncured second sole layer from the channel 24 (or 24a), the uncured second sole layer dispenses onto the upper surface 112 of the first sole layer 110 and also flows to the side of the lower surface 114 via the openings 116 and dispenses onto the lower surface 114 of the first sole layer 110. After the second sole layer 120 cures, a portion of the second sole layer 120 is attached to the upper surface 112, and another portion of the second sole layer 120 is attached to the lower surface 114. The second sole layer 120 located at the side of the lower surface 114 extends into the openings and connects with the spikes 130. The sole structure of the present invention improves the overall elasticity and durability.

In another embodiment, additional channels, for example 24b, at different locations instead of corresponding to the openings are added to adjust the injection speed when the uncured second sole layer is injected.

In another embodiment, small holes penetrating the upper surface and the lower surface are added to the first sole layer 110, for example, at the location 24b. The uncured second sole layer flows to the lower surface via the openings and the locations other than the borders of the first sole layer to adjust the uniformity of the dispensing.

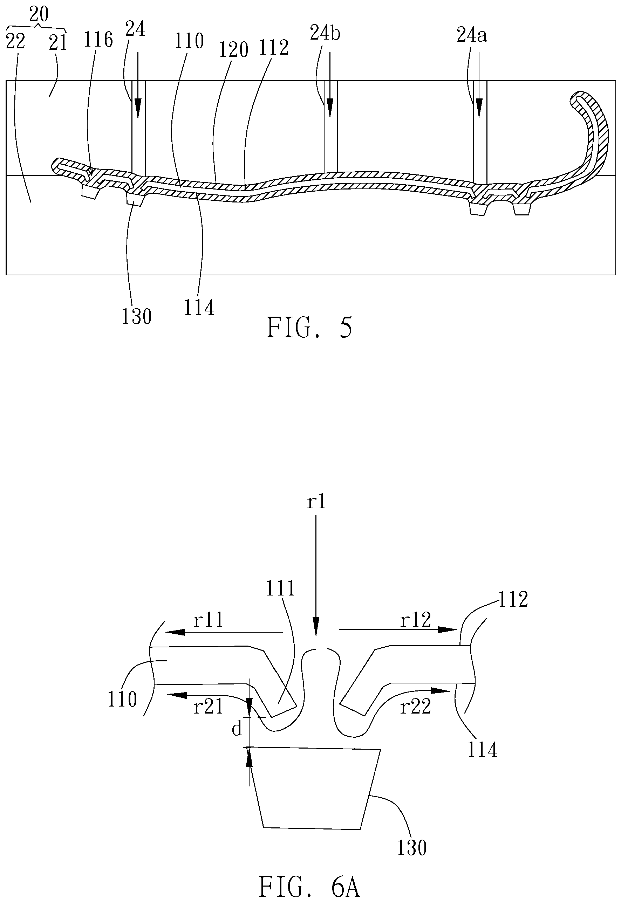

Figure 6A is a schematic view of the dispensing of the second sole layer. As shown in Figure 6A, the uncured second sole layer flows onto the first sole layer via the path r1 and dispenses onto the upper surface 112 via the paths r11 and r12. In addition, the uncured second sole layer flows onto the lower surface 114 through the openings via the path r1. In view of Figure 6A, the uncured second sole layer dispenses onto the lower surface 114 through the gap d between the spikes 130 and the first sole layer 110 via the paths r21 and r22. Besides, the oblique tubular wall 111 guides the uncured second sole layer to flow towards the side of the lower surface 114 and prevents it from obstructing the flow of the uncured second sole layer near the gap d to provide a better flow when the uncured second sole layer is dispensed onto the lower surface through the gap.

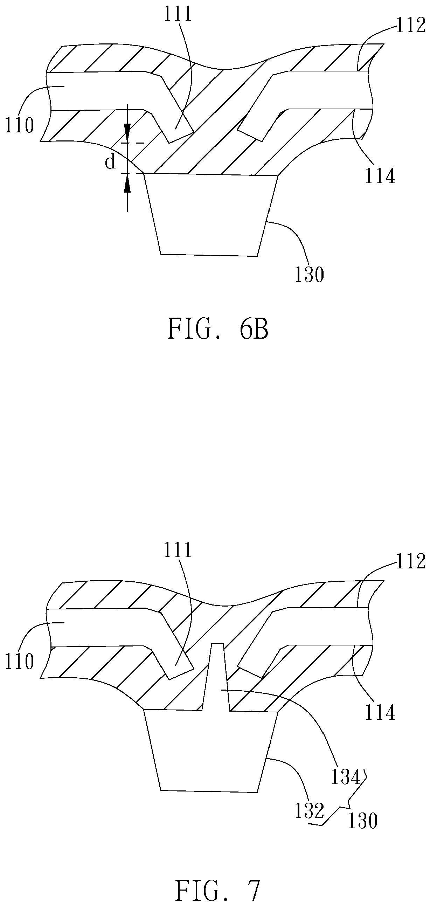

After the second sole layer cures, the manufacturing of the sole structure is complete. Figure 6B is a schematic view of connecting the second sole layer with the spikes. As shown in Figure 6B, the second sole layer 120 is not only attached to the upper surface 112 and lower surface 114 but also extends into the locations corresponding to the openings. The second sole layer 120 extended into the openings connects to the spikes 130 through the gap by flowing along the tubular wall 111.

In an embodiment, the first sole layer is a hard-fiber sole layer and the second sole layer is a thermoplastic-elastic sole layer. Therefore, the sole structure has better elasticity. The user's foot is not easily fatigued because the design is a thermoplastic-elastic sole layer enveloping a hard-fiber sole layer. Thus, the portion of the second sole layer which extends from the lower surface to the spikes along the tubular wall provides elasticity. In addition, the portion of the second sole layer which extends into the openings connects the side attached to the lower surface and the side attached to the upper surface to form an integral piece to provide elasticity and durability and to reduce impact when stepping on the ground, which improves protection to the feet. In addition, the second sole layer and the spikes may be identical in material so that the strain on the second sole layer is similar to that on the spikes' to keep the structure stable. However, the material of the spikes is not limited to what is mentioned above.

In another embodiment, the first sole layer is a carbon-fiber sole layer and the second sole layer is a thermoplastic polyurethane (PTU) sole layer. Applying the carbon-fiber sole layer as the first sole layer decreases the overall weight. Applying the TPU sole layer as the second sole layer enveloping the first sole layer improves the durability of the sole structure and provides a good anti-bending effect while running. Figure 7 shows another embodiment of the spikes 130, forming different spikes at different locations of the structure. For example, in Figure 7, the spikes 130 not only have the base part 132 as in the aforementioned embodiment but also have the protruding part 134 which protrudes from the base part 132 and extends towards the upper surface. Connecting the protruding part 134 and the portion of the second sole structure extending into the openings improves the bonding effect between the spikes 130, the first sole layer 110 and the second sole layer 120. Overall, the sole structure of the present invention, on one hand, provides bounciness and shock absorption through its second sole layer (PTU sole layer), and on the other hand, provides support to maintain the sole structure through its first sole layer (carbon-fiber sole layer) to prevent deformation from the force returned from ground via the spikes while running.

The present invention has been described by the embodiments mentioned above. However, the embodiments are only for examples. But necessary to point out that the disclosure embodiments are not intent to limit the present invention. Conversely, any modifications and equivalent setups which are included in the scope and spirt of the present invention are under the scope of the present invention.

## Claims

1. A sole structure, comprising:
a first sole layer having an upper surface and a lower surface, a plurality of openings penetrating the upper surface;
a plurality of spikes arranged at a side close to the lower surface corresponding to the openings, each of the spikes having a gap with the corresponding opening; and
a second sole layer enveloping the first sole layer;
wherein a portion of the second sole layer is attached to the upper surface, and another portion of the second sole layer is attached to the lower surface, and the second sole layer located to a side of the lower surface extends into the openings and is connected to the spikes.

2. The sole structure of claim 1, wherein the first sole layer has a plurality of tubular walls respectively surrounding peripheries of the openings and extending to the side of the lower surface, an end of the tubular wall away from the openings contracts toward to a center of the opening, and the second sole layer envelops the tubular walls

3. The sole structure of claim 2, wherein the gap is located between an end of the tubular walls away from the lower surface and the spikes.

4. The sole structure of claim1, wherein the first sole layer is a hard-fiber sole layer, and the second sole layer is a thermoplastic-elastic sole layer.

5. The sole structure of claim1, wherein the second sole layer and the spikes are identical in material.

6. The sole structure of claim1, wherein the first sole layer is a carbon-fiber sole layer, and the second sole layer is a thermoplastic polyurethane sole layer.

7. A method for manufacturing a sole structure by a mold, comprising:
forming a plurality of spikes in the mold;
arranging a first sole layer in the mold, the first sole layer having an upper surface and a lower surface, a plurality of openings penetrating the upper surface, the spikes arranged at a side close to the lower surface corresponding to the openings, each of the spikes having a gap with the corresponding opening; and
dispensing an uncured second sole layer in the mold;
wherein a portion of the second sole layer is attached to the upper surface, and another portion of the second sole layer is attached to the lower surface, and a side of the second sole layer located on the lower surface extends to the openings and is connected to the spikes.

8. The method for manufacturing a sole structure of claim 7, wherein the first sole layer has a plurality of tubular walls respectively surrounding peripheries of the openings and extending to a side of the lower surface, an end of the tubular walls away from the openings contracts toward to a center of the opening, and the second sole layer envelops the tubular walls.

9. The method for manufacturing a sole structure of claim 8, wherein the gap is located between an end of the tubular wall away from the lower surface and the spikes.

10. The method for manufacturing a sole structure of claim 7, wherein the first sole layer is a hard-fiber sole layer, and the second sole layer is a thermoplastic-elastic sole layer.

11. The method for manufacturing a sole structure of claim 7, wherein the second sole layer and the spikes are identical in material.

12. The method for manufacturing a sole structure of claim 7, wherein the first sole layer is a carbon-fiber sole layer, and the second sole layer is a thermoplastic polyurethane sole layer.
